# EUROPÄISCHE PATENTANMELDUNG

(11) **EP 1 752 046 A1**
(43) Veröffentlichungstag der Anmeldung: **14.02.2007**
(21) Anmeldenummer: 06015641.1
(22) Anmeldetag: 27.07.2006
(51) Int. Cl.: A23C 9/142, A23C 19/076, B01D 61/14

(54) **Verfahren zur Herstellung von konzentrierten und fermentierten Milchprodukten, insbesondere Frischkäse, Frischkäseerzeugnisse und Quark**

(30) Priorität: 09.08.2005 DE 102005037503
(71) Anmelder: Tuchenhagen Dairy Systems GmbH, 31157 Sarstedt (DE)
(72) Erfinder: Hülsen, Ulrich, 38820 Halberstadt (DE); von Ramin, Jürgen, 30926 Seelze (DE)

(57) **Zusammenfassung**

Die Erfindung betrifft ein Verfahren zur Herstellung von konzentrierten und fermentierten Milchprodukten (E), insbesondere Frischkäse, Frischkäseerzeugnisse und Quark, bei dem eine Prozessmilch (PM) eingesetzt, diese fermentiert und die fermentierte Prozessmilch (PMF) anschließend als zu filtrierendes Rohprodukt (Feed) (F) in einem Membrantrennverfahren (MT) in ein gesäuertes Retentat (R), aus dem das gewünschte Milchprodukt (E) aufbereitet wird, und in ein gesäuertes Permeat (P) getrennt wird, wobei das Membrantrennverfahren (MT) als Mikrofiltrationsverfahren (MF) ausgestaltet ist, welches nach dem Prinzip der Querstrom- oder Cross-flow-Filtration arbeitet und bei dem die trennspezifischen Bedingungen an den Membranen (M), wie Porenweite (d), Transmembrandruck (Δp) über die eigentliche Membran (M), Überströmrate (v) und Arbeitstemperatur (ϑ), derart festgelegt sind, dass an den Membranen (M) eine spezielle Retentatdeckschicht entsteht, die als verfahrensrelevante Sekundärmembran (SM) wirkt. Die Erfindung stellt sicher, dass bei einem Verfahren der gattungsgemäßen Art einerseits die Ausbeute, der Permeatflux und die Standzeit der Membranen erhöht werden und damit die Rentabilität des Verfahrens verbessert wird und andererseits die Qualität des gewünschten Endproduktes dahingehend verbessert wird, dass der Bittergeschmack beseitigt und eine wünschenswerte Konsistenzveränderung durch Erhöhung der Viskosität erreicht werden. Dies wird dadurch erreicht, dass das Mikrofiltrationsverfahren (MF) mit Membranen (M) mit jeweils einer Porenweite (d) im Bereich 0,1 ≤ d ≤ 0,8 µm, bevorzugt im Bereich 0,1 ≤ d ≤ 0,2 µm, bevorzugt bei d = 0,14 µm, mit der Überströmrate (v) im Bereich 6 ≤ v ≤ 15 m/s, bevorzugt im Bereich 7 ≤ v ≤ 10 m/s, mit dem Transmembrandruck (Δp) im Bereich 1 ≤ Δp ≤ 6 bar und mit der Arbeitstemperatur (ϑ) im Bereich 5 ≤ ϑ ≤ 60 °C, bevorzugt im Bereich 45 ≤ ϑ ≤ 55 °C, bevorzugt bei ϑ= 50 °C, betrieben wird (**Figur 1**).

## Beschreibung

### TECHNISCHES GEBIET

Die Erfindung betrifft ein Verfahren zur Herstellung von konzentrierten und fermentierten Milchprodukten, insbesondere Frischkäse, Frischkäseerzeugnisse und Quark, bei dem eine Prozessmilch eingesetzt, diese fermentiert und die fermentierte Prozessmilch anschließend als zu filtrierendes Rohprodukt (Feed) in einem Membrantrennverfahren in ein gesäuertes Retentat, aus dem das gewünschte Milchprodukt aufbereitet wird, und in ein gesäuertes Permeat getrennt wird, wobei das Membrantrennverfahren als Mikrofiltrationsverfahren ausgestaltet ist, welches nach dem Prinzip der Querstrom- oder Cross-flow-Filtration arbeitet und bei dem die trennspezifischen Bedingungen an den Membranen, wie Porenweite, Transmembrandruck über die eigentliche Membran, Überströmrate und Arbeitstemperatur, derart festgelegt sind, dass an den Membranen eine spezielle Retentatdeckschicht entsteht, die als verfahrensrelevante Sekundärmembran wirkt.

### STAND DER TECHNIK

Konzentrierte und fermentierte Milchprodukte, insbesondere Frischkäse, Frischkäseerzeugnisse und Quark, werden hergestellt, indem die Prozessmilch (thermisch behandelte Magermilch) nach der Fermentierung mittels mechanischer Trennung durch Zentrifugalkräfte (Separation; Separierverfahren), natürlicher Drainage unter Presswirkung (z.B. Pressfiltration) oder Ultrafiltration bis zur gewünschten Endkonzentration aufkonzentriert wird. Als Anfallprodukt entstehen bei diesen Verfahren erhebliche Mengen an Sauermolke oder Sauerpermeat.

Dominiert werden die in Rede stehenden Herstellungsprozesse vom Separierverfahren, das im Laufe der vergangenen 40 Jahren durch gezielte Optimierungen, z.B. mittels des Thermoquarkverfahrens, auf ein mit diesem Verfahren nicht mehr zu steigerndes Herstellungsniveau weiterentwickelt worden ist. Durch Variation der Separierbedingungen und technische Modifikationen der Separatoren ist derzeit eine Vielfalt von Verfahrensausgestaltungen möglich. Der Magermilcheinsatz liegt bei einem Eiweißgehalt der Magermilch von 3,3 bis 3,5 % im Bereich von 4,10 bis 4,15 kg Magermilch je Kilogramm zu produzierendem Magerquark oder Frischkäse (4,10 bis 4,15 kg Magermilch/kg Magerquark), wenn letztere 18 % Trockenmasse aufweisen. Somit fallen 3,10 bis 3,15 kg Sauermolke je Kilogramm Magerquark an (3,10 bis 3,15 kg Sauermolke/kg Magerquark). Der Eiweißgehalt erreicht dabei Größenordnungen von 12,6 bis 12,8 %.

Der mittels der bekannten Separierverfahren hergestellte Quark oder Frischkäse und auch teilkonzentrierte Produkte (z.B. Joghurt-Quark-Desserts) führen zwar zu gewünschten Standardprodukten, die aber den Nachteil haben, dass die Ausnutzung des eingesetzten Rohstoffes begrenzt ist, sodass die Materialökonomie dieser Verfahren unbefriedigend bleibt. So liegt beispielsweise bei einem Quark mit den gesetzlich geforderten 18 % Trockenmasse der Eiweißgehalt im Bereich von 12,6 bis 12,8 %, wobei der Gesetzgeber lediglich 12 % fordert. Des weiteren fallen schwer verwertbare Sauermolken in erheblichem Umfang an. Die Sauermolken enthalten nicht sedimentierbare Resteiweißgehalte, die im Produkt verloren gehen und damit zusätzlich die Materialökonomie belasten. Die Endprodukte führen während der Lagerung häufig zum Fehler "leicht molkenlässig" oder "molkenlässig", sodass die Qualität der Produkte unter diesem Nachteil leidet.

Neben den durch Separation gekennzeichneten Herstellverfahren der in Rede stehenden Art sind Verfahren bekannt, in denen die Aufkonzentrierung der fermentierten Prozessmilch mittels Ultrafiltration erfolgt. Ein Verfahren der gattungsgemäßen Art wird dem Fachmann durch KESSLER, H. G., Lebensmittel- und Bioverfahrenstechnik ― Molkereitechnologie, Freising, Verlag A. Kessler, 1988, S. 69 bis 91 nahegelegt. Dort ist in Abbildung 4.37 der Produktionsplan für die molkenablauffreie Quarkherstellung dargestellt, wobei im Unterschied zum gattungsgemäßen Verfahren die Vollkonzentrierung mittels Ultrafiltration durchgeführt wird. Hinweise darauf, dass diesbezügliche Membrantrennverfahren nach dem Prinzip der Querstrom- oder Cross-flow-Filtration arbeiten und dass an den Membranen eine spezielle Ablagerungsschicht entsteht, die als verfahrensrelevante Sekundärmembran wirkt, finden sich an anderer Stelle dieser Veröffentlichung.

Darüber hinaus ist aus der US 2003/0129275 A1 bekannt, dass bei der Käse- und Quarkherstellung auch die Mikrofiltration und Ultrafiltration adäquat verwendet werden können. Die Anwendung der Mikrofiltration auf Magermilch zur Herstellung von Käse und Molkeproteine ist beispielsweise in der US 2003/0077357 A1 beschrieben.

Die DE 43 19 813 A1 beschreibt ein Verfahren zur Herstellung von steriler Milch durch dynamische Mikrofiltration, wobei letztere als Querstromfiltration durchgeführt wird und die sich dabei bildende Ablagerungsschicht, die sog. dynamische Membran, weitgehend verantwortlich ist für die nachfolgend auftretende Filtration.

Ultrafiltrations-Membranen arbeiten dabei mit Porenweiten d im Bereich 0,01 ≤ d ≤ 0,001 µm. Der Magermilcheinsatz liegt bei einem Eiweißgehalt der Magermilch von 3,3 bis 3,5 % im Bereich von 3,60 bis 3,75 kg Magermilch je Kilogramm zu produzierendem Magerquark oder Frischkäse (3,60 bis 3,75 kg Magermilch/kg Magerquark), wenn letztere 18 % Trockenmasse aufweisen. Neben den gewünschten Endprodukten resultiert aus diesem Verfahren Sauerpermeat mit 2,60 bis 2,75 kg je Kilogramm Magerquark (2,60 bis 2,75 kg Sauerpermeat/kg Magerquark). Der Eiweißgehalt erreicht dabei Größenordnungen von 11,7 bis 12,1 %.

Mittels Ultrafiltration hergestellter Quark oder Frischkäse führt zwar zu sehr guter Materialökonomie, hat aber erhebliche Nachteile bezüglich der Produktqualität. Ein wesentlicher Nachteil ist "leichter Bittergeschmack" oder "Bittergeschmack". Dieser wird u.a. verursacht durch zu hohe Ca⁺⁺-Konzentrationen und zu hohe Gehalte an Molkeneiweißen, bedingt durch die Trenneigenschaften der Ultrafiltrations-Membranen. Des weiteren ist dieser Quark gegenüber dem Standard durch geringere Viskosität nachteilig verändert. Diese wird verursacht durch die Scherbelastung des Produktes im Konzentratkreis (Retentatkreis) bei Arbeitsdrücken der Anlagen bis zu 10 bar. Der Mindesteiweißgehalt im Endprodukt wird nicht zwingend erreicht. Der Filtratfluss (Permeatflux) durch die Membranen ist mit 15 bis 20 l/(hm²) sehr begrenzt, sodass sehr hohe Betreiberkosten die Rentabilität des Verfahrens belasten. Die verwendeten Membranen unterliegen sehr hohem Verscheiß durch irreversible Verblockung. Für Sauerpermeate bestehen darüber hinaus praktisch kaum Verwertungsmöglichkeiten. Sie fallen in erheblichem Umfang an (siehe vor).

In einer weiteren Verfahrensgruppe der in Rede stehenden Verfahren werden die Prozessmilchen vor der Fermentierung vorkonzentriert und es werden aus diesen Konzentraten Endprodukte mit den gewünschten Endkonzentrationen hergestellt. Durch die Vorkonzentrierung werden allerdings nur vordergründig Mengenanteile des Anfallproduktes Sauermolke bzw. Sauerpermeat reduziert.

Je nach Art der Vorkonzentrierung ist es möglich, die Zusammensetzung der Endprodukte und deren Produktcharakteristik zu beeinflussen. Diese Vorkonzentrierung kann mittels Mikrofiltration durchgeführt werden, die neben dem Retentat (Konzentrat) zu einem Süssmilchpermeat führt, wobei bei letzterem Weiterverwertungsmöglichkeiten bestehen, die von Interesse sind. Bekannt ist weiterhin, dass die vorstehend erwähnten Konzentrate mittels Separation zum standardgerechten Endprodukt geführt werden können.

Weiterhin kann die Vorkonzentrierung der nicht fermentierten Prozessmilchen mit thermischen Verfahren (Verdampfen) erfolgen oder es kann durch Zusatz von Trockenmilch (Milchpulver) in ähnlicher Weise eine Vorkonzentrierung erreicht werden.

Auch mittels Nanofiltration, Ultrafiltration oder Umkehrosmose sind derartige Vorkonzentrierungen Stand der Technik. Weiterhin ist bekannt, dass die Prozessmilch bis zur gewünschten Endkonzentration mittels Ultrafiltration oder Mikrofiltration vor der Fermentation aufkonzentriert wird und im Endkonzentrat die Fermentation erfolgt. Bei diesen Verfahren entsteht keine Sauermolke.

Vorkonzentrierungen und/oder Endkonzentrierung der noch nicht fermentierten Prozessmilch führen je nach Verfahren zur Beeinträchtigung der Produktcharakteristik. So führen Konzentrierungen mittels Ultrafiltration zu Bittergeschmack. Vorkonzentrierung und Endkonzentrierung mittels Mikrofiltration führen ab Konzentrierungsgraden über 12 % Trockenmasse ebenfalls zu Bittergeschmack.

Die Zugabe von Trockenstoffen (Milchpulver) oder die Aufkonzentrierung der Prozessmilch mittels Umkehrosmose führt im Vergleich zur Separation in noch stärkerem Maße zu Disproportionen hinsichtlich der angestrebten Produktzusammensetzung, da sich das Verhältnis von Eiweiß zu Trockenmasse nachteilig verändert.

Die Aufkonzentrierung der Prozessmilch mittels thermischer Verfahren führt nur teilweise zu Denaturierungen der Molkeneiweiße, sodass diese nicht an einer Kopräzipitatbildung (Eiweißkomplex zwischen Kasein und Molkenprotein) beteiligt sind. Konsequenzen sind Ausbeuteeinbusen. Zudem sind diese Verfahren gegenüber den oben genannten durch hohen Energieaufwand wirtschaftlich nicht rentabel.

Ausgehend von den Nachteilen des vorgenannten Standes der Technik ist es Aufgabe der vorliegenden Erfindung, bei einem Verfahren der gattungsgemäßen Art einerseits die Ausbeute, den Permeatflux und die Standzeit der Membranen zu erhöhen und damit die Rentabilität des Verfahrens zu verbessern und andererseits die Qualität des gewünschten Endproduktes dahingehend zu verbessern, dass der Bittergeschmack beseitigt und eine wünschenswerte Konsistenzveränderung durch Erhöhung der Viskosität erreicht werden.

### ZUSAMMENFASSUNG DER ERFINDUNG

Diese Aufgabe wird durch ein Verfahren mit den Merkmalen des Anspruchs 1 gelöst. Vorteilhafte Ausgestaltungen des vorgeschlagenen Verfahrens sind Gegenstand der Unteransprüche.

Der grundlegende erfinderische Gedanke besteht darin, dass die fermentierte Prozessmilch als zu filtrierendes Rohprodukt (Feed) in an sich bekannter Weise in einem Mikrofiltrationsverfahren weiterverarbeitet wird. Das Mikrofiltrationsverfahren arbeitet dabei als Querstrom- oder Cross-flow-Filtration und seine trennspezifischen Bedingungen an den Membranen sind derart festgelegt, dass an den Membranen eine spezielle Retentatdeckschicht entsteht. Bei den trennspezifischen Bedingungen handelt es sich im Wesentlichen um den Porendurchmesser der Membranen, den Transmembrandruck über die eigentliche Membran, die Überströmrate und die Arbeitstemperatur.

Die erzeugte spezielle Retentatdeckschicht bildet sich während des Filtrationsprozesses auf der eigentlichen Membranoberfläche in Form einer als sog. dynamische Membran aufwachsenden Ablagerungsschicht aus und ihre Struktur ist für die Lage des effektiven Trennschrittes von größerer Bedeutung als der Aufbau der Membran selbst. Die spezielle Retentatdeckschicht stellt die eigentliche verfahrensrelevante Sekundärmembran dar, die eine Verschiebung des effektiven Trennschnittes in Richtung kleinerer Partikeldurchmesser während des Filtrationsprozesses zur Folge hat, wobei die Membran selbst nur noch Trägerfunktion besitzt.

Das Mikrofiltrationsverfahren wird mit anorganischen und/oder organischen Membranen und erfindungsgemäß mit jeweils einer Porenweite d im Bereich 0,1 ≤ d ≤ 0,8 µm, bevorzugt im Bereich 0,1 ≤ d ≤ 0,2 µm, bevorzugt bei d = 0,14 µm, betrieben. Hier können beispielsweise rohrförmige keramische Membranen (tubular ceramic membranes) zur Anwendung kommen, wie sie beispielsweise von TAMI Industries unter der Bezeichnung INSIDE CéRAM membranes^{™} angeboten und vertrieben werden (http://www.tami-industries.com/ products/ceramuk.asp; Stand 03.08.2005).

Das Mikrofiltrationsverfahren wird darüber hinaus zur Erzeugung der Sekundärmembran erfindungsgemäß mit der Überströmrate v im Bereich 6 ≤ v ≤ 15 m/s, bevorzugt im Bereich 7 ≤ v ≤ 10 m/s, mit dem Transmembrandruck Δp im Bereich 1 ≤ Δp ≤ 6 bar und mit der Arbeitstemperatur ϑ im Bereich 5 ≤ ϑ ≤ 60 °C, bevorzugt im Bereich 45 ≤ ϑ ≤ 55 °C, bevorzugt bei ϑ= 50 °C, betrieben.

Die verfahrensrelevante Sekundärmembran generiert, verglichen mit dem Stand der Technik, im gesäuerten Retentat eine vergleichsweise erhöhte und im gesäuerten Permeat eine vergleichsweise reduzierte Inhaltsstoffkonzentration.

Eine vorteilhafte Ausgestaltung des Verfahrens gemäß der Erfindung sieht vor, dass die Prozessmilch vor ihrer Fermentierung zur Erhöhung des Kaseingehaltes auf einen Eiweißgehalt von 5,0 bis 5,5 % und bezüglich des Trockensubstanzgehaltes auf 11,0 bis 11,5 % vorkonzentriert wird.

Dabei erfolgt diese Fermentierung weiterhin, gemäß einem ersten Vorschlag, entweder unter Säuerungsbedingungen, die sich aus einer Kulturzusatzmenge von 1 % und einer Labmenge von 0,01 % ergeben, oder, gemäß einem zweiten Vorschlag, unter derart modifizierter Säuerungskultur- und/oder Labenzymwirkung, dass das bislang übliche Mengenverhältnis zwischen Kultur und Lab von 1/0,02 zugunsten der Kultur auf ein Mengenverhältnis von 1,2/0,01 erhöht ist

### KURZBESCHREIBUNG DER ZEICHNUNGEN

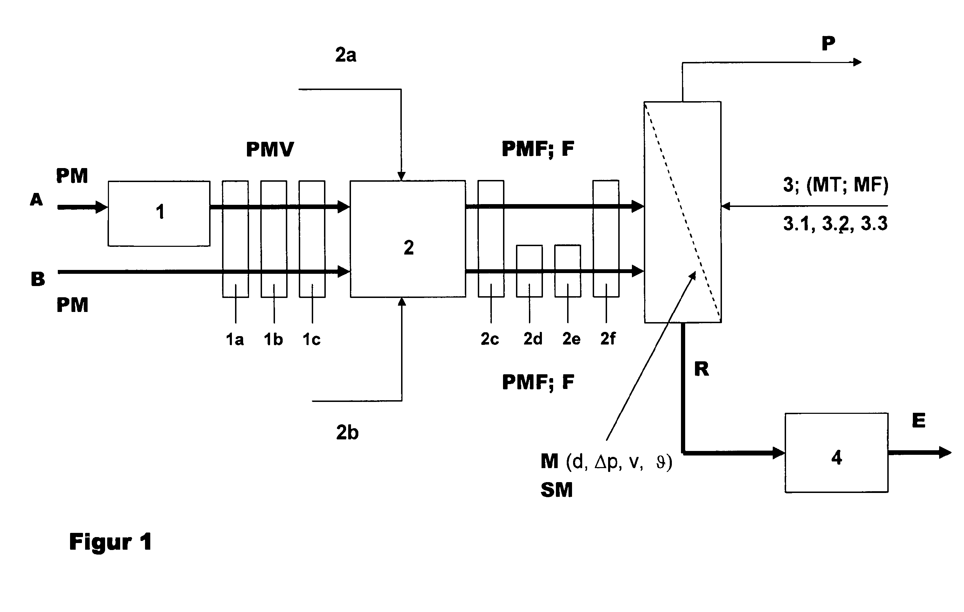

Zwei bevorzugte Ausgestaltungen des Verfahrens gemäß der Erfindung sind in Form eines vereinfachten Prozessschemas in Figur 1 der Zeichnung dargestellt und werden nachfolgend auch in Verbindung mit zwei diesbezüglichen Prozessbeispielen **A** und **B** beschrieben.

### DETAILLIERTE BESCHREIBUNG

In einer ersten Ausgestaltung des Verfahrens gemäß der Erfindung wird eine Prozessmilch PM (Figur 1; s. auch nachfolgendes Ausführungsbeispiel A, **Schema A)** einer Vorkonzentrierung 1, einer anschließenden Hocherhitzung 1 a, danach einer Heißhaltung 1 b und schließlich einer Kühlung 1 c unterzogen. Eine derart vorbehandelte vorkonzentrierte Prozessmilch PMV wird einer Fermentierung 2 zugeführt, wobei letztere entweder unter bekannten Säuerungsbedingungen 2a oder unter modifizierter Säuerungskultur- und Labenzymwirkung 2b durchgeführt wird. Der Fermentierungsprozess führt zu einer fermentierten (gesäuerten) Prozessmilch PMF, die sich in Form eines sog. Koagulums ausprägt. Nach der Fermentierung 2 erfolgt ein Zerschlagen des Koagulums 2c und anschließend ein Temperieren 2f. Die derart behandelte fermentierte Prozessmilch PMF wird im gewählten, nachfolgend noch näher erläuterten Ausführungsbeispiel A als zu filtrierendes Rohprodukt (Feed) F einer einstufigen Mikrofiltration 3 zugeführt, in der ein als Mikrofiltrationsverfahren MF ausgestaltetes Membrantrennverfahren MT zur Anwendung kommt. Die dabei verwendeten, erfindungsgemäß betriebenen Membranen M sind vorzugsweise rohrförmig und aus keramischem Material ausgebildet und sie werden nach dem Prinzip der Querstrom- oder Cross-flow-Filtration betrieben.

An den vorstehend genannten Membranen M werden die trennspezifischen Bedingungen, wie Porenweite d, Überströmrate v, Transmembrandruck Δp über die eigentliche Membran und Arbeitstemperatur ϑ erfindungsgemäß derart festgelegt, dass dadurch an ihnen eine spezielle Retentatdeckschicht entsteht, die, verglichen mit dem Stand der Technik, als eine verfahrensrelevante Sekundärmembran SM im gesäuerten Retentat R eine vergleichsweise erhöhte und im gesäuerten Permeat P eine vergleichsweise reduzierte Inhaltsstoffkonzentration generiert.

Das Mikrofiltrationsverfahren MF bzw. die Mikrofiltration 3 wird in an sich bekannter Weise mit anorganischen oder organischen Membranen M (bei einstufiger Mikrofiltration) betrieben, wobei erfindungsgemäß eine Porenweite d im Bereich 0,1 ≤ d ≤ 0,8 µm, bevorzugt im Bereich 0,1 ≤ d ≤ 0,2 µm, bevorzugt bei d = 0,14 µm, zur Anwendung kommt. Geeignete Membranen sind beispielsweise sog. "tubular ceramic membranes", wie sie beispielsweise von TAMI Industries unter der Bezeichnung INSIDE CeRAM membranes^{™} angeboten und vertrieben werden.

Die verfahrensrelevante Sekundärmembran SM wird im Rahmen des Mikrofiltrationsverfahrens MF erfindungsgemäß mit der Überströmrate v im Bereich von 6 ≤ v ≤ 15 m/s, bevorzugt im Bereich von 7 ≤ v ≤ 10 m/s, mit dem Transmembrandruck Δp im Bereich von 1 ≤ Δp ≤ 6 bar und mit der Arbeitstemperatur 9 im Bereich von 5 ≤ ϑ ≤ 60 °C, bevorzugt im Bereich von 45 ≤ 9 ≤ 55 °C, bevorzugt bei 9= 50 °C, realisiert.

Das Retentat R (Konzentrat) wird einer an sich bekannten Weiterverarbeitung 4, beispielsweise Kühlen und Verpacken, zugeführt, wodurch das Milchprodukt E, das gewünschte Endprodukt, entsteht.

In einer zweiten Ausgestaltung des Verfahrens gemäß der Erfindung wird eine Prozessmilch PM (Figur 1; s. auch nachfolgendes Ausführungsbeispiel B, Schema B), wie bereits vorstehend beschrieben, der Hocherhitzung 1 a, danach der Heißhaltung 1 b und schließlich der Kühlung 1 c unterzogen. Die derart vorbehandelte Prozessmilch PM wird der Fermentierung 2 zugeführt, wobei diese entweder unter bekannten Säuerungsbedingungen 2a oder unter modifizierter Säuerungskultur- und Labenzymwirkung 2b durchgeführt wird. Der Fermentierungsprozess führt in der vorstehend beschriebenen Weise zu der fermentierten (gesäuerten) Prozessmilch PMF, die sich wiederum in Form des sog. Koagulums ausprägt. Nach der Fermentierung 2 erfolgt ein Zerschlagen des Koagulums 2c und anschließend ein Erhitzen im sauren Bereich 2d und danach ein Heißhalten 2e, bevor das vorstehend bereits genannte Temperieren 2f zur Anwendung kommt.

Die derart behandelte fermentierte Prozessmilch PMF wird als zu filtrierendes Rohprodukt (Feed) F im gewählten, nachfolgend im Einzelnen noch beschriebenen Ausführungsbeispiel B einer mehrstufigen Mikrofiltration 3 zugeführt, die im vorliegenden Falle aus drei Stufen 3.1, 3.2 und 3.2 besteht. In dieser Mikrofiltration 3 kommt das als Mikrofiltrationsverfahren MF ausgestaltete Membrantrennverfahren MT zur Anwendung, wie es vorstehend bereits kurz dargestellt wurde. Bei der mehrstufigen Ausgestaltung der Mikrofiltration 3 ist der Einsatz von anorganischen und/oder organischen Membranen M der bereits vorstehend beschriebenen Art und Beschaffenheit möglich. Das Retentat R (Konzentrat) wird wiederum der an sich bekannten Weiterverarbeitung 4 zugeführt, wo das Milchprodukt E, das gewünschte Endprodukt, entsteht.

### DATEN KONKRETER AUSGESTALTUNGEN DES VERFAHRENS

### Ausführungsbeispiel A:

### Einstufige Filtration mit vorkonzentrierter Prozessmilch

Gemäß Schema A (die Nummerierung der Prozessschritte entspricht jener in Figur 1) wird beispielsweise im Eiweißgehalt (Eiw.) auf 5,0 - 5,5 % und hinsichtlich der Trockensubstanz (TM) auf 11,0 - 11,5 % (pH - Wert von 6,7) vorkonzentrierte Prozessmilch [Schritt 1] zunächst in bekannter Weise auf eine Temperatur von 90°C hocherhitzt [Schritt 1a], unmittelbar danach zur maximalen Denaturierung der Molkeneiweiße über eine Zeitspanne von 5 min heiß gehalten [Schritt 1b] und auf eine Fermentierungstemperatur von 25 - 30 °C abgekühlt [Schritt 1c].

Nunmehr folgt die Fermentierung [Schritt 2] mittels an sich üblicher mesophiler und nicht gasbildender Betriebskulturen und Labenzym. Die Anwendungsmenge der Betriebskultur wird jedoch um 20 % gegenüber der üblichen Arbeitsweise erhöht. Demgegenüber wird die an sich übliche Labmenge um 50 % reduziert [Schritt 2b]. Somit betragen die Kulturzusatzmenge 1,2 % und die Labmenge 0,01 % (Labstärke 1/10 000). Nach einer Fermentierungszeit von rund 15 h bei einer Temperatur von 25 °C ist der pH - Wert von 4,5 erreicht und es ist ein festes Koagulum entstanden.

Anschließend wird das Koagulum entweder durch Umpumpen in einen zweiten Prozesstank oder durch intensives Rühren im gleichen Tank auf bekannte Weise zerschlagen [Schritt 2c], sodass eine fließfähige Masse mit möglichst einheitlicher Trockenmasseverteilung entsteht.

Dieses so vorbereitete Rohprodukt wird nach Temperieren auf rund 50 °C [Schritt 2f] einem einstufigen Mikrofiltrationsprozess unterworfen [Schritt 3]. Bei der Mikrofiltration kommen im Ausführungsbeispiel hydrodynamisch optimierte Keramikmembranen mit Porenweiten von 0,14 µm mit "großem" Fließkanaldurchmesser zum Einsatz (beispielsweise Membrane von TAMI Industries mit der Bezeichnung INSIDE CéRAM membranes^{™}, Sunflower).

Der gemäß Schema A dokumentierte kontinuierliche einstufige Mikrofiltrationsprozess erfolgt erfindungsgemäß mit Überströmraten von 9,5 m/s und Transmembrandrücken über die eigentliche Membran von Δp = 2 - 4 bar. Nach Durchlaufen der instationären Inbetriebnahmephase mit erhöhtem Flux läuft die Mikrofiltrationsanlage nun stationär und stabil mit Fluxraten von ca. 80 l/(hm²). In Abhängigkeit vom gewünschten Ziel erfolgt die Trockenmasseeinstellung im Quark mittels bekannter Differenzdurchsatzregelung zur Rohstoff― und Permeatmenge. Alternativ sind Mittel-Infrarot- und/oder Nah-Infrarot-inline Verfahren (MIR; NIR) zur Prozesskontrolle und Regelung einsetzbar.

Die Sauerpermeate sind klare gelbliche Flüssigkeiten. Im Prozess werden über die gesamte Laufzeit der Anlage von beispielsweise 10 h stabile Prozessbedingungen mit Trockenmassen von 5,6 - 5,65 % im Permeat realisiert. Die Trockenmasse im Quark ist in bekannter Weise variabel einstellbar. Bei 18 % Trockenmasse werden je nach Milchqualität 12,0 - 12,25 % Eiweiß erreicht [Schritt 4]. Für 1 kg Quark werden 3,65 - 3,7 kg Magermilch benötigt. Für 100 kg vorkonzentrierte Prozessmilch sind ca. 160 kg Prozessmilch notwendig. Daraus resultieren ca. 44 kg Quark und ca. 56 kg Sauerpermeat. Nach Verlassen der Filtrationsanlage erfolgt in bekannter Weise die Quarkkühlung und gegebenenfalls Weiterverarbeitung zu Frischkäse und Quarkprodukten.

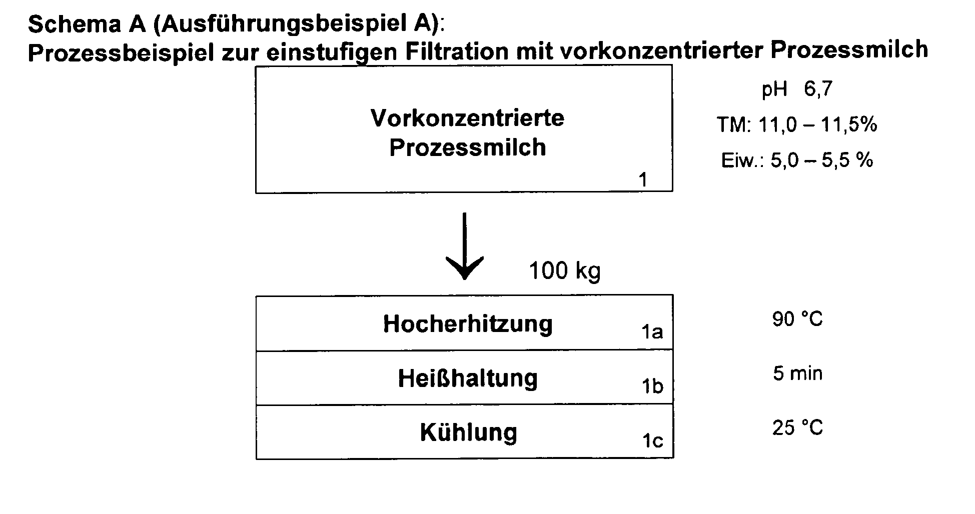

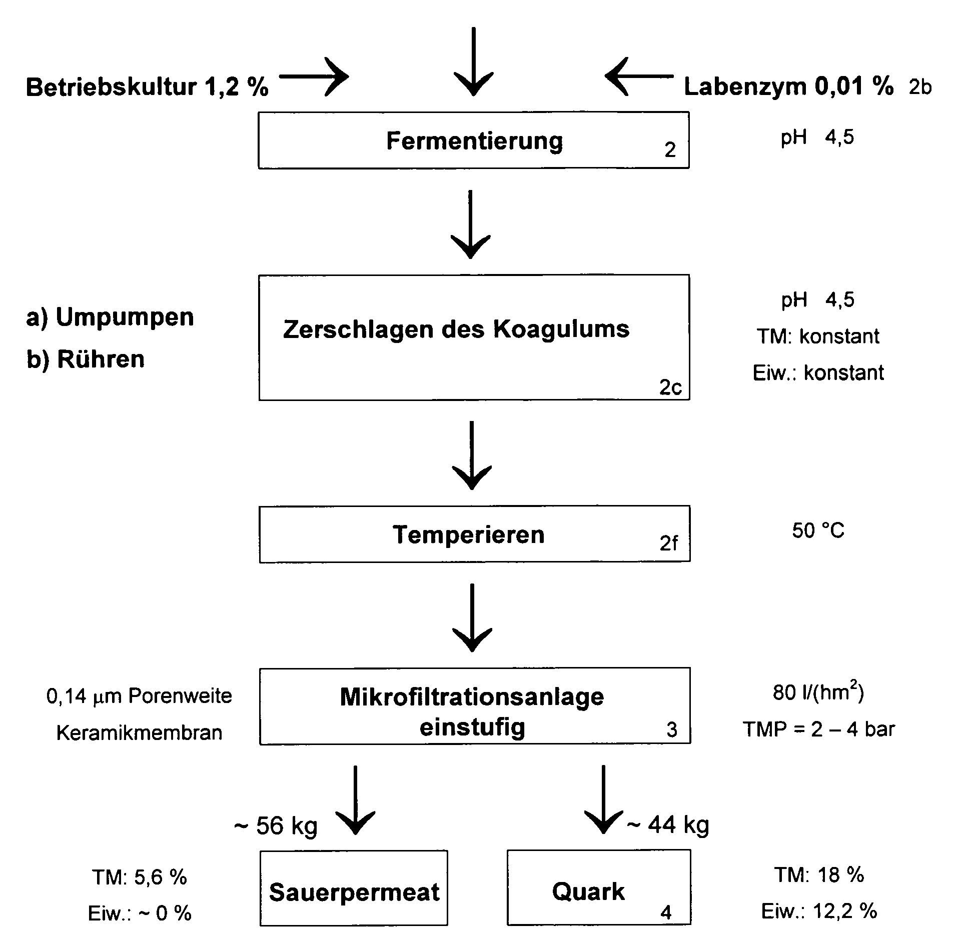

### Ausführungsbeispiel B:

### Mehrstufige Filtration mit nicht vorkonzentrierter Prozessmilch

Gemäß Schema B (die Nummerierung der Prozessschritte entspricht jener in **Figur 1**) wird nicht vorkonzentrierte Prozessmilch (Magermilch) mit Trockenmassewerten (TM) von ca. 9,2 % und Eiweißgehalten von ca. 3,45 % zunächst in bekannter Weise auf eine Temperatur von 90°C hocherhitzt [Schritt 1a], unmittelbar danach zur maximalen Denaturierung der Molkeneiweiße über eine Zeitspanne von 15 min heiß gehalten [Schritt 1b] und auf eine Fermentierungstemperatur von 25 - 30 °C abgekühlt [Schritt 1c].

Nunmehr folgt die Fermentierung [Schritt 2] mittels an sich üblicher mesophiler und nicht gasbildender Betriebskultur und Labenzym. Die Anwendungsmengen der Betriebskultur und des Labenzyms entsprechen den üblichen Werten. Somit betragen die Kulturzusatzmenge 1,0 % und die Labmenge 0,02 % (Labstärke 2/10 000) [Schritt 2a]. Nach einer Fermentierungszeit von rund 15 h bei einer Temperatur von 25 °C ist der pH ― Wert von 4,5 erreicht und es ist ein normal geronnenes Standardkoagulum entstanden.

Gemäß Schema B wird das Koagulum durch intensives Rühren auf bekannte Weise zerschlagen [Schritt 2c], sodass eine fließfähige Masse mit möglichst einheitlicher Trockenmasseverteilung entsteht.

Dieses so vorbereitete Material wird nach Erhitzung im sauren Bereich bei einer Temperatur von 60 °C [Schritt 2d], anschließender Heißhaltung über eine Zeitspanne von ca. 5 min [Schritt 2e] und einer Temperierung auf eine Filtrationstemperatur von ca. 50 °C [Schritt 2f] dem Mikrofiltrationsprozess mit den erfindungsgemäßen Bedingungen unterworfen [Schritt 3]. Zur Filtration kommen im Ausführungsbeispiel B hydrodynamisch optimierte Keramikmembranen mit Porenweiten von 0,14 µm mit "großem" Fließkanaldurchmesser zum Einsatz (s. vorstehende Spezifizierung im Ausführungsbeispiel A). Der gemäß Schema B dokumentierte kontinuierliche dreistufige Prozess [Schritte 3.1, 3.2, 3.3] erfolgt mit Überströmraten von 7,5 m/s, 8,5 m/s und 9,5 m/s, ansteigend von Stufe 1 bis 3, und Transmembrandrücken von Δp = 1 - 4 bar, ansteigend gleichfalls in den Stufen. Nach Durchlaufen der instationären Inbetriebnahmephase mit erhöhtem Flux läuft die Mikrofiltrationsanlage stationär und stabil mit Fluxraten von ca. 90 I/(hm²) ― 60 I/(hm²), abfallend von Stufe 1 bis 3.

In Abhängigkeit vom gewünschten Ziel erfolgt die Trockenmasseeinstellung im Quark mittels bekannter Differenzdurchsatzregelung zur Rohstoff ― und Permeatmenge. Alternativ sind MIR und/oder NIR-inline Verfahren zur Prozesskontrolle und Regelung einsetzbar.

Die Sauerpermeate sind klare gelbliche Flüssigkeiten. Im Prozess werden über die gesamte Laufzeit der Anlage von beispielsweise 10 h stabile Prozessbedingungen mit Trockenmassen von ca. 5,65 % im Permeat realisiert. Die Trockenmasse im Quark ist in bekannter Weise variabel einstellbar. Bei 18 % Trockenmasse werden je nach Milchqualität 12,5 - 12,75 % Eiweiß erreicht [Schritt 4]. Für 1 kg Quark werden 3,75 -3,8 kg Magermilch benötigt.

Aus 100 kg Prozessmilch resultieren ca. 26 kg Quark und ca. 74 kg Sauerpermeat.

Nach Verlassen der Filtrationsanlage erfolgt in bekannter Weise die Quarkkühlung und gegebenenfalls Weiterverarbeitung zu Frischkäse und Quarkprodukten.

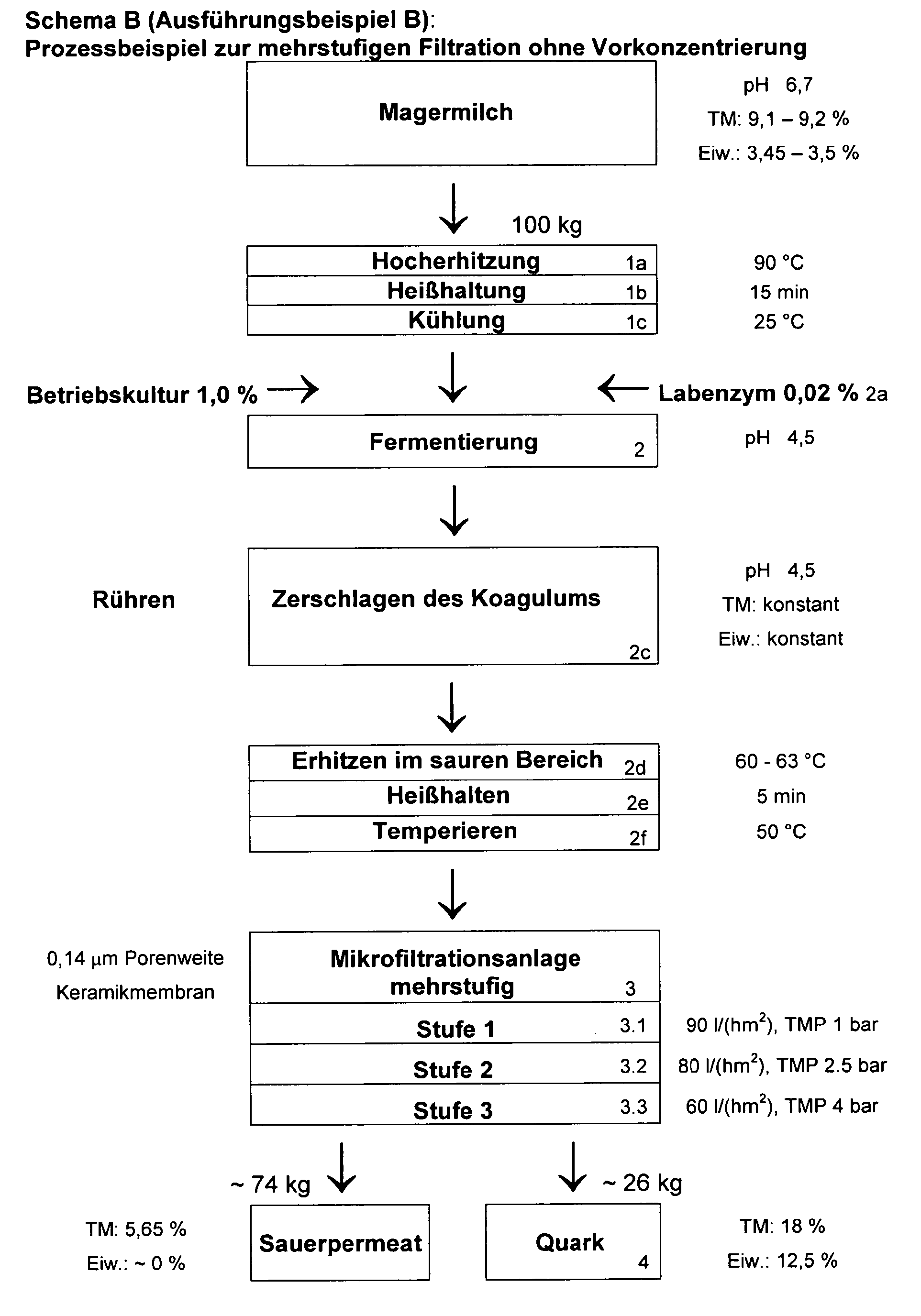

### Figur 1, Schema A, B

- E: Milchprodukt (gewünschtes Endprodukt)
- F: zu filtrierendes Rohprodukt (Feed)
- M: Membran
- MT: Membrantrennverfahren
- MF: Mikrofiltrationsverfahren
- P: Permeat
- PM: Prozessmilch (nicht fermentiert, ungesäuert)
- PMF: fermentierte Prozessmilch (gesäuerte Prozessmilch)
- PMV: vorkonzentrierte Prozessmilch
- R: Retentat (Konzentrat)
- SM: Sekundärmembran

- d: Porenweite in µm
- Δp: Transmembrandruck in bar
- v: Überströmrate in m/s

- ϑ: Arbeitstemperatur

- 1: Vorkonzentrierung
- 1 a: Hocherhitzung
- 1 b: Heißhaltung
- 1 c: Kühlung

- 2: Fermentierung
- 2a: bekannte Säuerungsbedingungen
- 2b: modifizierte Säuerungskultur- und Labenzymwirkung
- 2c: Zerschlagen des Koagulums
- 2d: Erhitzen im sauren Bereich
- 2e: Heißhalten
- 2f: Temperieren

- 3: Mikrofiltration
- 3.1: erste Stufe
- 3.2: zweite Stufe
- 3.3: dritte Stufe

- 4: Weiterverarbeitung

## Patentansprüche

1. Verfahren zur Herstellung von konzentrierten und fermentierten Milchprodukten (E), insbesondere Frischkäse, Frischkäseerzeugnisse und Quark, bei dem eine Prozessmilch (PM) eingesetzt, diese fermentiert und die fermentierte Prozessmilch (PMF) anschließend als zu filtrierendes Rohprodukt (Feed) (F) in einem Membrantrennverfahren (MT) in ein gesäuertes Retentat (R), aus dem das gewünschte Milchprodukt (E) aufbereitet wird, und in ein gesäuertes Permeat (P) getrennt wird, wobei das Membrantrennverfahren (MT) als Mikrofiltrationsverfahren (MF) ausgestaltet ist, welches nach dem Prinzip der Querstrom- oder Cross-flow-Filtration arbeitet und bei dem die trennspezifischen Bedingungen an den Membranen (M), wie Porenweite (d), Transmembrandruck (Δp) über die eigentliche Membran (M), Überströmrate (v) und Arbeitstemperatur (ϑ), derart festgelegt sind, dass an den Membranen (M) eine spezielle Retentatdeckschicht entsteht, die als verfahrensrelevante Sekundärmembran (SM) wirkt,
**dadurch gekennzeichnet,**
**dass** das Mikrofiltrationsverfahren (MF)
• mit Membranen (M) mit jeweils einer Porenweite (d) im Bereich 0,1 ≤ d ≤ 0,8 µm, bevorzugt im Bereich 0,1 ≤ d ≤ 0,2 µm, bevorzugt bei d = 0,14 µm,
• mit der Überströmrate (v) im Bereich 6 ≤ v ≤ 15 m/s, bevorzugt im Bereich 7 ≤ v ≤ 10 m/s,
• mit dem Transmembrandruck (Δp) im Bereich 1 ≤ Δp ≤ 6 bar und
• mit der Arbeitstemperatur (ϑ) im Bereich 5 ≤ ϑ ≤ 60 °C, bevorzugt im Bereich 45 ≤ ϑ ≤ 55 °C, bevorzugt bei 9= 50 °C, betrieben wird.

2. Verfahren nach Anspruch 1,
**dadurch gekennzeichnet,**
**dass** die Prozessmilch (PM) vor ihrer Fermentierung zur Erhöhung des Kaseingehaltes auf einen Eiweißgehalt von 5,0 bis 5,5 % und bezüglich des Trockensubstanzgehaltes auf 11,0 bis 11,5 % vorkonzentriert wird.

3. Verfahren nach Anspruch 2,
**dadurch gekennzeichnet,**
**dass** die Fermentierung unter Säuerungsbedingungen erfolgt, die sich aus einer Kulturzusatzmenge von 1 % und einer Labmenge von 0,01 % ergeben.

4. Verfahren nach Anspruch 2,
**dadurch gekennzeichnet,**
**dass** die Fermentierung unter derart modifizierter Säuerungskultur- und/oder Labenzymwirkung erfolgt, dass das bislang übliche Mengenverhältnis zwischen Kultur und Lab von 1/0,02 zugunsten der Kultur auf ein Mengenverhältnis von 1,2/0,01 erhöht ist.
